# EUROPÄISCHE PATENTSCHRIFT

(11) **EP 2 654 438 B1**
(45) Veröffentlichungstag und Bekanntmachung des Hinweises auf die Patenterteilung: **13.09.2017**
(21) Anmeldenummer: 11813328.9
(22) Anmeldetag: 21.12.2011
(51) Int. Cl.: A21D 8/04

(54) **ZWEI-PHASEN FERMENTATION VON SAUERTEIG**
BIPHASIC FERMENTATION OF SOUR DOUGH
FERMENTATION À DEUX PHASES DU LEVAIN NATUREL

(30) Priorität: 21.12.2010 DE 102010061431
(43) Veröffentlichungstag der Anmeldung: 30.10.2013
(73) Patentinhaber: Ernst Böcker GmbH & Co. KG, 32427 Minden (DE)
(72) Erfinder: AMANN-BRANDT, Judith, 32457 Porta Westfalica (DE); BRANDT, Markus, 32423 Minden (DE)
(74) Vertreter: Fleuchaus, Michael A.
(86) Internationale Anmeldenummer: PCT/EP2011/073541
(87) Internationale Veröffentlichungsnummer: WO 2012/085049

(56) Entgegenhaltungen:
- EP-A1- 1 854 358
- EP-A1- 2 243 375
- EP-A2- 0 124 074
- WO-A2-2004/105495
- JP-A- 2001 204 370
- US-A- 5 378 458
- US-B1- 6 183 787
- DATABASE BIOSIS [Online] BIOSCIENCES INFORMATION SERVICE, PHILADELPHIA, PA, US; 2009, RYZHKOVA E P ET AL: "Microbial Protection of Wheat Bread using a Trophic Chain of Lactobacillus delbrueckii and Propionibacterium freudenreichii", XP002702526, Database accession no. PREV200900530631 & RYZHKOVA E P ET AL: "Microbial Protection of Wheat Bread using a Trophic Chain of Lactobacillus delbrueckii and Propionibacterium freudenreichii", BIOTEKHNOLOGIYA, Nr. 2, 2009, Seiten 29-36, XP9171129, ISSN: 0234-2758
- DATABASE WPI Week 201075 Thomson Scientific, London, GB; AN 2010-N22368 XP002702527, & RU 2 399 211 C2 (UNIV MOSC LOMONOSOV BIOLOG FACULTY) 20. September 2010 (2010-09-20)
- SUOMALAINEN T H ET AL: "PROPIONIC ACID BACTERIA AS PROTECTIVE CULTURES IN FERMENTED MILKS AND BREADS", DAIRY SCIENCE AND TECHNOLOGY (LE LAIT), EDP SCIENCES, PARIS, FR, Bd. 79, 1. Januar 1999 (1999-01-01), Seiten 165-175, XP002909953, ISSN: 0023-7302, DOI: 10.1051/LAIT:1999113
- ZHANG C ET AL: "Propionic acid production by cofermentation of Lactobacillus buchneri and Lactobacillus diolivorans in sourdough", FOOD MICROBIOLOGY, ACADEMIC PRESS LTD, LONDON, GB, Bd. 27, Nr. 3, 1. Mai 2010 (2010-05-01), Seiten 390-395, XP026961044, ISSN: 0740-0020 [gefunden am 2009-12-03]
- JAVANAINEN P ET AL: "Factors affecting rye sour dough fermentation with mixed-culture pre-ferment of lactic and propionic acid bacteria", JOURNAL OF CEREAL SCIENCE, ACADEMIC PRESS LTD, XX, Bd. 18A, 1. Januar 1993 (1993-01-01), Seiten 171-185, XP002192333, ISSN: 0733-5210, DOI: 10.1006/JCRS.1993.1044

## Beschreibung

Gegenstand der Erfindung ist ein Verfahren zur Anreicherung von Aromastoffen und natürlichen Säuren im Sauerteig basierend auf zwei unabhängigen Fermentationsschritten, wobei der erste Schritt eine Fermentation durch Milchsäurebakterien und der zweite Schritt eine Fermentation durch Propionsäurebakterien darstellt.

Milchsäurefermentationen sind lange bekannt und dienten seit jeher dazu Lebensmittel zu konservieren, denn durch die Ansäuerung einer Milchsäurefermentation mit Laktobazillen wurde das Milieu so sauer, dass pathogene Keime wie z.B. Clostridien oder Fremdkeime, die den Geschmack negativ beeinflussen, in ihrem Wachstum gehemmt werden.

Darüber hinaus fand Sauerteig in erster Linie als Backtriebmittel, d. h. zur Lockerung des Brotteiges Verwendung. Mit Einführung der Bäckerhefe wurde Sauerteig hauptsächlich zur Säuerung von Roggenmehlteigen eingesetzt. Für die Herstellung von Backwaren mit mehr als 20 % Roggenmehlanteil ist die Teigsäuerung von eminenter Bedeutung, da erst dadurch eine entsprechende Backfähigkeit des Roggenmehles erreicht wird. Durch Verwendung von Sauerteigen lassen sich auch andere stärkehaltige Getreidearten (wie z.B. Mai und Reis), Pseudogetreide (wie z.B. Quinoa), aber auch andere stärkehaltige Lebensmittel (wie z.B. Buchweizen und Kartoffeln) zu Brot verarbeiten. Letzteres gewinnt zunehmend an Bedeutung, führt man sich vor Augen, dass die Prävalenz für Zöliakie (Glutenunverträglichkeit) in den meisten Ländern Europas und den USA auf 1:500 bis 1:250 geschätzt wird.

In den fünfziger Jahren des letzten Jahrhunderts bekam der Sauerteig in diesem Bereich Konkurrenz durch den Einsatz von künstlichen Teigsäuerungsmitteln basierend auf Milchsäure, Essigsäure, Zitronensäure und sauren Phosphaten. Die mit diesen Teigsäuerungsmitteln hergestellten Backwaren sind jedoch mit herkömmlichen, auf Sauerteig basierenden Backwaren hinsichtlich Textur und Frischhaltung nicht zu vergleichen.

Insbesondere ist der Wert einer Sauerteigfermentation nicht auf die bloße Säuerung des Teiges beschränkt. Protein-, Lipid- und Kohlenhydratstoffwechsel der an der Sauerteigfermentation beteiligten Mikroorganismen (Milchsäurebakterien und Hefen) führen zur Bildung von Aromaprekursoren, die während das Backprozesses in Aromastoffe umgewandelt werden und so im Wesentlichen zum natürlichen Geschmacks- und Aromabildes des Sauerteigbrotes beitragen. Darüber hinaus führen die während der Fermentation auftretenden Quellungs- und Abbauvorgänge eine bessere Frischhaltung der Backwaren, was auch mit einer gesteigerten Aromahaltung einhergeht. Diese natürlich Geschmacks- und Aromabildung der Sauerteigprodukte führte in den letzten Jahren, auch durch den Wandel der Ernährungsgewohnheiten hin zu natürlicheren und wertvolleren Nahrungsmitteln, eine Renaissance.

Die Ansäuerung des Teiges ist somit nicht allein für die Backfähigkeit von Bedeutung. Denn die Anreicherung der aus der Milchsäuregärung resultierenden Säuren führt auch zu einer Unterdrückung das Wachstums von Schimmelpilzen und fadenziehenden Bakterien und stellt somit eine natürliche Konservierung der Backwaren da.

Darüber hinaus wird die Haltbarkeit im Vergleich zu ungesäuerten und nicht ausreichend gesäuerten Backwaren deutlich gesteigert. Dennoch wird versucht die Haltbarkeit durch Zugabe weiterer Konservierungsstoffe zu steigern, z.B. durch die Verwendung anderer biogener Säuren. So hat zum Beispiel Propionsäure im Vergleich zu Milch- und Essigsäure eine stärkere antimikrobielle Wirkung. Des Weiteren ist sie auch als charakteristischer Aromastoff in verschiedenen Lebensmitteln enthalten.

Aufgrund ihrer antimikrobiellen Wirkung wird Propionsäure schon seit den dreißiger Jahren in den USA im größeren Maßstab zur Brotkonservierung eingesetzt - jedoch als Konservierungsstoff, also durch direkte Zugabe der Chemikalie. Auch in Deutschland ist Propionsäure durch die Umsetzung der EU-Richtlinien als Zusatzstoff zugelassen.

In der Natur entsteht Propionsäure als ein enzymatisches Abbauprodukt, also ein Fermentationsprodukt, z.B. der Milchsäure. Der hierfür nötig Stoffwechselweg, der Methylmalonat-Weg, ist jedoch für die im Sauerteig enthaltenen Mikroorganismen nicht verfügbar.

Umgesetzt werden kann dieser Stoffwechselweg von verschiedenen anderen Mikroorganismen, allen voran den Propionsäurebakterien. Typische Vertreter, die zum Einsatz in der Lebensmittelerzeugung kommen, sind z.B. *P. freudenreichii, P. acidipropionici, P. jensenii* oder *P. shermannii.*

Allerdings ist eine einfache Beimengung entsprechender Bakterien in die Starterkultur des Sauerteiges wenig erfolgversprechend, denn aufgrund der unterschiedlichen Wachstumsbedingungen von Milchsäurebakterien, die säuretolerant und fakultative anaerob sind, und Propionsäurebakterien, die nicht besonders säuretolerant und strikt anaerob sind, ist von sehr geringer Propionsäurebildung in einer Mischkultur auszugehen.

Es gab intensive Bemühungen, durch Modifikation der Zusammensetzung der Starterkulturen, sowohl in Bezug auf die Art der Bakterien als auch auf das Mischungsverhältnis, also der für die Animpfung verwendeten Keimzahlen Milchsäurebakterien und Propionsäurebakterien in einer Mischkultur einzusetzen. Problematisch hierbei sind jedoch auch, die deutlich höhere Wachstumsrate der Milchsäurebakterien im Vergleich zu den Propionsäurebakterien, die relativ geringe Säuretoleranz der Propionsäurebakterien in Zusammenhang mit der Tatsache, dass Propionsäurebakterien die Milchsäure als Nahrungsquelle benötigen. Die Folge hiervon ist, dass die Milchsäurebakterien zu Beginn sehr schnell wachsen und dabei das Milieu soweit ansäuern, dass das Wachstum der Propionsäurebakterien zum Erliegen kommt. Bekannt sind auch Verfahren, bei denen der Kultur nach der Milchsäurefermentation ein neutralisierender Stoff zugegeben wird, um das Milieu auf die Anfordernisse der Propionsäurebakterien einzustellen. Auf einer so vorbereiteten Kultur wachsen allerdings in kürzester Zeit Fremdkeime, wie Clostridien oder Hefen, die unter normalen Umständen im Teig aufgrund ihrer Säureintoleranz sich nicht vermehren könnten. Es kommt somit nicht zu einer kontrollierten Vermehrung der Propionsäurebakterien und damit zu einer erhöhten Bildung von Propionsäure, sondern der Teig verdirbt.

So offenbarte bereits Ryzhkova et al., (2009, Biotekhnologiya, ISSN 0234-2758) einen doppelt fermentierten Sauerteig, in welchem zuerst mit L. delbrueckii und anschließend mit P. freudenreichii fermentiert wurde, allerdings in nacheinander ablaufenden Verfahren und bei maximalem Erreichen einer Natriumproprionat Konzentration von nur 150-190 mM.

Die vorliegende Erfindung stellt sich die Aufgabe, ein Verfahren zu entwickeln, die natürlichen Aroma- und Konservierungsstoffe des klassischen Sauerteiges um die bei der Fermentation durch Propionsäurebakterien entstehenden Stoffe zu erweitern.

Zu diesem Zweck stellt die Erfindung ein Verfahren bereit, dadurch gekennzeichnet, dass der Sauerteig in zwei voneinander im Wesentlichen unabhängigen Schritten fermentiert wird, wobei zunächst eine erste Fermentation mit Milchsäurebakterien und dann eine zweite Fermentation mit Propionsäurebakterien durchgeführt wird. Das Verfahren wird so durchgeführt, dass zwischen der ersten Fermentation mit Milchsäurebakterien und der zweiten Fermentation mit Propionsäurebakterien, ein die Milchsäurebakterien abtötender Schritt durchgeführt wird. Dies kann eine Autosterilisation, Pasteurisierung, Trocknung, Sterilisation oder Hitzebehandlung sein.

Dieser die Milchsäurebakterien abtötende Schritt hat dabei die Funktion, die erste Fermentation zu beenden, und eine veränderte Ausgangssituation für den folgenden zweiten Fermentationsprozess zu gewährleisten.

Für die zweite Fermentation werden somit definierte und konstante Bedingungen geschaffen. Diese betrifft zum Einen die Keimzusammensetzung, denn durch den abtötenden Schritt werden nicht nur Milchsäurebakterien abgetötet sondern auch andere potentiell unerwünschte Keime und Hefen.

Ferner können gezielt Wachstumsparameter, wie z.B. pH-Wert, vor dem Starten des zweiten Fermentationsschrittes, z. B. durch Zugabe von dem Fachmann bekannten, neutralisierenden Zusätzen eingestellt oder pH-statisch gehalten werden,

Im Rahmen der Erfindung wird der erste Fermentationsschritt, die Milchsäurefermentation, bei einer Temperatur von 12° C bis 44 °C und in einem pH-Bereich von 3,5 bis 5,5 durchgeführt. Als Nährsubstrat für eine Sauerteigherstellung im Rahmen der Erfindung kommen die dem Fachmann bekannten Getreidesorten z.B. Roggen, Gerste, Weizen, Dinkel etc. aber auch andere Getreidearten oder stärkehaltige Ausgangsprodukte, wie Mais, Reis, Quinoa, Buchweizen und Kartoffeln zum Einsatz. Auch Hefeextrakte können Verwendung finden. Typischer Weise werden in einer Milchsäurefermentation ein oder mehrere der nachfolgend aufgezählten Milchsäure produzierenden Bakterien aufgefunden:
*Lb. plantarum, Lb. pontis, Lb. sanfranciscensis, Lb. crispatus, Lb. suntoryeus, Le. argentinum, Lb. helveticus, Lb. paralimentarius, Lb. fermentum, Lb. paracasei, Lb. frumenti , Lb. alimentarius, Lb. buchneri, Lb. parabuchneri, Lb. reuteri, Lb. secaliphilus amylovorus, Lb. cellobiosus, Lb. jensenii, Lb. farciminis, Lb. ftuctivorans" W. cibaria, W confusa, P. acidilactici, P. parvulus, P. pentosaceus* und *Oenococcus oeni.*

Es ist dabei zu berücksichtigen, dass nicht alle diese Mikroorganismen geeignet sind, um in Reinkulturen oder gemischten Starterkulturen zu einer Sauerteigherstellung zugesetzt zu werden, sondern dass es sich bei dieser Aufzählung mehr um die Mikroorganismen handelt, die typischerweise - z.B. durch Mehleintrag - im Sauerteig aufgefunden werden.

Im Rahmen der Erfindung werden Reinkulturen aus einem oder mehreren der aufgelisteten Mikroorganismen eingesetzt, bevorzugt sind hierbei Mischkulturen aus isolierten Reinkulturen von *L. reuteri, L. crispatus, L. plantarum, L. secaliphilus* und *L. pontis.*

Der Schritt der Milchsäurefermentation wird in einem Temperaturbereich von 12-44°C, vorzugsweise 12-18°C, 16-24°C, 14-28°C, 18-30°C, 16-32°C oder 30-44°C durchgeführt. Der pH Wert der ersten Fermentationsreaktion stellt sich durch das Entstehen der natürlichen Säuren, Milch- und Essigsäure, ein oder kann zusätzlich sofern nötig eingestellt werden auf einen pH-Wert zwischen 3 und 5,5, vorzugsweise 3,5 und 4, weiter vorzugsweise 3,5 und 5.

Die Inkubation zur Milchsäurefermentation beträgt dabei ca. 3 bis 96 Stunden, vorzugsweise 3-6, 4-8, 5-10, 4-12, 5-15, 6-18, 12-36, 18-48, 24-72, 36-96 oder 48-96 Stunden.

Nach Abschluss der Milchsäurefermentation wird die Fermentationsbrühe einem Schritt unterzogen, durch den die Milchsäurebakterien und ggf andere vorliegende Mikroorganismen abgetötet werden. Geeignet sind hierzu dem Fachmann bekannte Methoden ausgewählt z.B. aus Methoden zur Wärmebehandlung, Erhitzung, Pasteurisierung, Sterilisation, Trocknung (Walzen- oder Sprühtrockung) oder Bestrahlung.

Anschließend erfolgt die Propionsäurefermentation unter Luftabschluß, bei einer Temperatur von 12 °C bis 32 °C und innerhalb eines pH-Bereiches von 5,5 bis 7,5. Im Detail wird dabei der Schritt der Propionsäurefermentation in einem Temperaturbereich von 8-32°C, vorzugsweise 8-16°C, 10-20°C, 12-21°C, 16-24°C, 14-28°C, 18-30°C oder 16-32°C durchgeführt. Der pH Wert der Fermentationsreaktion wird dabei zu Beginn der Reaktion auf einen pH-Wert zwischen 5 und 8, vorzugsweise 5,5 und 7,5, weiter vorzugsweise 6 und 7 eingestellt.

Typischerweise werden zum Schritt der Propionsäurefermentation Bakterien ausgewählt aus der Gruppe enthaltend *P. freudenreichii, P. shermannii, P. jensenii* oder *P. acidipropionici* zu gegeben. Die Startkeimzahl, die dem erfindungsgemäßen 2. Fermentationsschritt zugeben wird, hängt dabei von dem Volumen der Fermentationsbrühe und der angestrebten Fermentationsdauer ab. Sollte aber eine Mindestmenge von 5x10E6 pro Liter nicht unterschreiten.

Durch die eingestellten Fermentationsbedingungen werden für die, an den beiden unabhängigen Fermentationsschritte beteiligten Bakterien jeweils optimale Wachstumsbedingung geschaffen.

Mit dem erfindungsgemäßen Fermentationsverfahren kann ein flüssiger Sauerteig und im weiteren ein Sauerteigkonzentrat, bei welchem es sich um einen im Volumen einreduzierten Sauerteig (durch Eindampfen, Trocknen etc.) handelt, hergestellt werden. Dieser Sauerteig oder dieses Sauerteigkonzentrat zeichnet sich dabei insbesondere durch die Anreicherung mit Aromastoffen, insbesondere solchen, die durch die Propionsäurebildung angereichert werden, aus und ist geeignet diese Aromastoffe in Backmischungen einzutragen. Gemäß einer weiteren Ausführungsform der Erfindung wird entsprechend hergestellter Sauerteig oder Sauerteigkonzentrat zur Herstellung von Backwaren verwendet.

Demgemäß sind auch die unter Verwendung des erfindungsgemäß hergestellten Sauerteiges respektive Sauerteigkonzentrates hergestellten Backwaren mit entsprechenden Aromastoffen, und unter anderem mit Propionsäure angereichert.

Nachweislich enthält der erfindungsgemäß hergestellte Sauerteig mindestes 1-8 % w/w, vorzugsweise 2-3% w/w, vorzugsweise 2-5% w/w, vorzugsweise 3-8% w/w Propionsäure. Sauerteigkonzentrat, hergestellt aus dem erfindungsgemäß erzeugten Sauerteig, enthält mindestens 4 % w/w, vorzugsweise mindestens 5% w/w, mindestens 6% w/w, mindestens 7%, w/w mindestens 8% w/w, mindestens 9% w/w, weiter vorzugsweise 5-10% w/w Propionsäure.

Gemäß einer weiteren Ausführungsform wird der mehrfach fermentierte Sauerteig oder das daraus hergestellte Sauerteigkonzentrat durch Wärme- oder Gefriertrocknung haltbar gemacht.

Gemäß weiterer Ausführungsformen wird erfindungsgemäß hergestellter Sauerteig bzw. Sauerteigkonzentrat zur Aromaanreicherung, Aromaverstärkung oder Biokonservierung von Backwaren verwendet. Besonders hervorzuheben ist dabei die Verschiebung der Aromastoffe oder Aromaperkursoren durch Zugabe des erfindungsgemäß hergestellten Sauerteiges respektive Sauerteigkonzentrates.

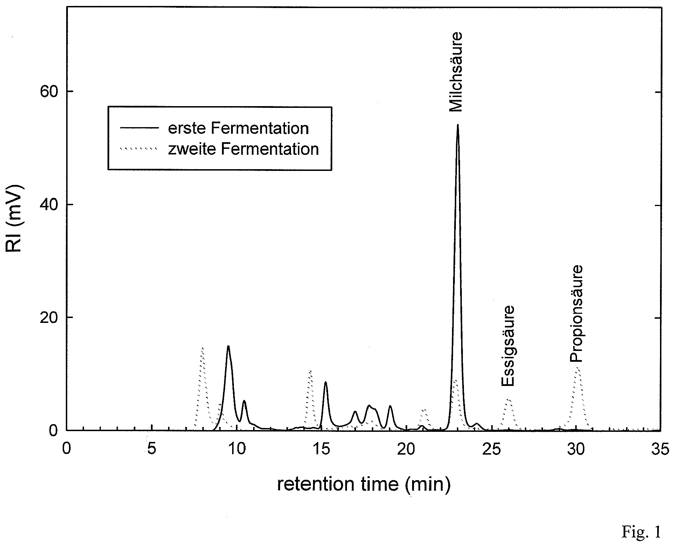

In Geschmackstests wurden die Backwaren, die mit Sauerteig gemäß der Erfindung hergestellt waren, eindeutig als geschmacksintensiver, herzhafter, deftiger, runder bzw. abgerundeter beschrieben. In analytischen Verfahren z.B. HPLC, wurden entsprechend eine Verschiebung der Konzentrationen für Milchsäure, Essigsäure und Propionsäure, festgestellt. Beispiel 2 (Fig.1) zeigt eine HPLC Analyse von erfindungsgemäß erzeugtem Sauerteig und herkömmlichem Sauerteig, in welcher die Verschiebung der Milchsäure und Propionsäure exemplarisch herausgearbeitet ist.

Das erfindungsgemäße Herstellungsverfahren führt außerdem zu ausreichend hohen Propionsäurekonzentrationen in den Backwaren, um den Verderb im Vergleich zu herkömmlich hergestellten Backwaren zu verlängern. So konnten, in Abhängigkeit des verwendeten Mehls (Weizen- oder Roggenmehl, bzw. Mischungen der beiden) Propionsäurekonzentration im fertigen Brot von 0,05 % bis 0,22 % erreicht werden. In den nachfolgend beschriebenen Lagerversuchen konnten die Erfinder zeigen, dass die unter Verwendung des erfindungsgemäß hergestellten Sauerteiges bzw. Sauerteigkonzentrates erzeugten Backwaren deutlich längere Haltbarkeiten aufwiesen.

### Beispiele:

### 1. Zweistufiges Herstellungsverfahren

Zur Teigherstellung wurde Weizengrießkleie eingesetzt und ein Teig mit einer Teigausbeute A von 400 hergestellt. Da die charakteristischen Milchsäurebakterien im Anstellgut, die ausgewählt sind aus der Gruppe bestehend aus *Lb. buchneri, Lb. Reuteri, Lb. plantarum, Lb. pontis, , Lb. crispatus L. secaliphilus,, W. confusa,* und *P. pentosaceus,* ein Temperaturoptimum von 40 °C haben, wurde das Wasser vor der Zugabe auf diese Temperatur gebracht. Somit sind die günstigen Milieubedingungen zur Fermentation durch Milchsäurebakterien gegeben. Es erfolgte ein Einsatz von 10 % Anstellgut zur Fermentation (Typ II). Der Weizensauerteig wurde in gasdichten Tüten solange geführt, bis der Sr° konstant blieb. Somit sollte erreicht werden, dass Maltose und Glucose vollständig vergärt wurden. Anschließend wurde mit 20 % Natronlauge das pH auf 6,5-7,0 eingestellt und die Suspension für 10 min auf 72 °C erhitzt. Nach Inokulation mit *P. freudenreichii* mit 10⁷ Zellen/ml wurde der gasdicht verpackte Sauerteig bei Raumtemperatur für 30 Tage gelagert.

In einem anderen Beispiel wurde ein Sauerteig aus Roggenvollkornmehl mit einer Flora aus *L. amylovorus, L, reuteri, L.pontis, L. crispatus, L. frumenti* und S. *cerevisiae* bei einer Teigausbeute von 400 für 48 h bei 40 °C fermentiert und anschließend walzengetrocknet. Anschließend wurde der getrocknete Sauerteig mit derselben Menge Leitungswasser versetzt und mit *P. shermannii* (10⁷ KBE/ml) angeimpft. Die Fermentation wurde bei 25 °C für 30 Tage pH-statisch (pH 6-6,8) ausgeführt und ggf der pH-Wert kontrolliert und korrigiert.

### 2. HPLC - Analyse der Aromaperkursoren

In Fig. 1 sind standardmäßig mit HPLC erzeugte Chromatogramme von Roggensauerteig aufgeführt, die nach den traditionellen Verfahren (erste Fermentation) hergestellt wurden, sowie ein Sauerteig nach dem dargelegten zweistufigen Fermentationsverfahren. Deutlich ist die Verschiebung der aromarelevanten Verbindungen zu erkennen.

### 3. Bestimmung schimmelfreier Tage

Die Wirksamkeit der fermentierten Teige gegenüber dem Brotverderb durch Schimmelpilze sollte in Challenge-Versuchen nachgewiesen werden. Zum Vergleich dienten chemisch mit Hilfe von Propionsäure konservierte Brote.

Der Brotherstellungsprozess erfolgt dabei mit herkömmlichem Sauerteig und parallel gemäß dem in Beispiel 1 beschrieben Sauerteig.

Zu dem herkömmlichen Sauerteig wurde zusätzlich eine handelsübliche Menge an Propionsäure direkt vor dem Kneten hinzudosiert. Hierzu wurden Brote mit Propionsäurekonzentrationen von 0,3% bezogen auf die Mehleinwaage hergestellt.

Nach Verbacken und Abkühlen der Brote wurden diese in Scheiben geschnitten.

Die Brote wurden in nicht abgedichteten Tüten bei Raumtemperatur gelagert, um die Toastbrotlagerung des Verbrauchers nachzustellen und auf Schimmelbewuchs beobachtet. Die schimmelfreie Zeitdauer der frei gelagerten Brote wurde verglichen.

In der nachfolgenden Tabelle werden die Ergebnisse des Challenge-Versuches aufgeführt. Vergleichend dazu werden die Ergebnisse der mitgeführten, chemisch konservierten Brote aufgezeigt.

Unterschiede ergeben sich in der schimmelfreien Zeitdauer der konservierten Brote.

**Tabelle:**

| Brottype | Propionsäure im Brot [%] | Essigsäure im Brot [%] | Schimmelfreie Tage |
|---|---|---|---|
| Sauerteigfreies Brot (Triebmittel Hefe) | - | - | 8 |
| Erfindungsgemäßes Brot (zweistufiges Verfahren) | 0,15 | 0,09 | 23 |
| Zusatz von 0,3% Propionsäure | 0,15 | - | 19 |
| Zusatz von 0,2% Propionsäure und 0,1% Essigsäure | 0,12 | 0,13 | 20 |

## Patentansprüche

1. Verfahren zurAnreicherung von Aromastoffen im Sauerteig **dadurch gekennzeichnet, dass** der Sauerteig in zwei von einander im Wesentlichen unabhängigen Schritten fermentiert wird, wobei zunächst eine erste Fermentation mit Milchsäurebakterien und dann eine zweite Fermentation mit Propionsäurebakterien durchgeführt werden und dass zwischen der ersten Fermentation mit Milchsäurebakterien und der zweite Fermentation mit Propionsäurebakterien, ein Schritt zum Abtöten der Milchsäurebakterien durchgeführt wird.

2. Verfahren nach einem der Ansprüche 1, wobei die Milchsäurebakterienfermentation bei einer Temperatur von 12 °C bis 44 °C und bis zu einem pH von 3,5 bis 5,5 durchgeführt wird.

3. Verfahren nach einem der Ansprüche 1 oder 2, wobei die Proprionsäurebakterienfermentation unter Luftabschluss, bei einer Temperatur von 8 °C bis 32 °C und einem pH von 5,5 bis 7,5 durchgeführt wird.

4. Verfahren nach einem der Ansprüche 1 bis 3, wobei der Milchsäurebakterien abtötende Schritt eine Pasteurisierung, eine Trocknung, eine Sterilisation, eine Hitzebehandlung oder eine Bestrahlung ist.

5. Verfahren nach einem der Ansprüche 1 bis 4, wobei der doppelt fermentierte Sauerteig oder das Sauerteigkonzentrat mittels Trocknung lagerfähig gemacht wird.

6. Verfahren nach einem der Ansprüche 1 bis 5 **dadurch gekennzeichnet, dass** die zweifache Fermentation zu einer Konzentration von mindestens 1% w/w Propionsäure in der Fermentationsbrühe führt.

7. Sauerteig erhältlich nach dem Verfahren gemäß der Ansprüche 1 bis 6.

8. Sauerteig dadurch erhältlich, dass der Sauerteig in zwei von einander im Wesentlichen unabhängigen Schritten fermentiert wird, wobei zunächst eine erste Fermentation mit Milchsäurebakterien und dann eine zweite Fermentation mit Propionsäurebakterien durchgeführt werden und dass zwischen der ersten Fermentation mit Milchsäurebakterien und der zweite Fermentation mit Propionsäurebakterien ein Schritt zum Abtöten der Milchsäurebakterien durchgeführt wird.

9. Sauerteig gemäß Anspruch 8 **dadurch gekennzeichnet, dass** der doppelt fermentierte Sauerteig mit Aromastoffen angereichert ist und eine Konzentration von mindestens 1% w/w Propionsäure aufweist.

10. Sauerteigkonzentrat erhältlich durch Einreduzieren aus dem Sauerteig gemäß der Ansprüche 7 bis 9 enthaltend mindestens 5 % *w*/*w* Propionsäure.

11. Verwendung von Sauerteig nach einem der Ansprüche 7 bis 9 oder von Sauerteigkonzentrat nach Anspruch 10 zur Herstellung von Backwaren.

12. Verwendung von Sauerteig nach einem der Ansprüche 7 bis 9 oder von Sauerteigkonzentrat nach Anspruch 10 zurAromaanreicherung bzw. Aromaverstärkung in Backwaren.

13. Verwendung von Sauerteig nach einem der Ansprüche 7 bis 9 oder von Sauerteigkonzentrat nach Anspruch 10 zur Biokonservierung von Backwaren.

## Claims

1. Method for enriching flavouring substances in sourdough, **characterized in that** the sourdough is fermented in two steps which are substantially independent of one another, with first a first fermentation with lactic acid bacteria and then a second fermentation with propionic acid bacteria being carried out, and **in that** a step for killing the lactic acid bacteria is carried out between the first fermentation with lactic acid bacteria and the second fermentation with propionic acid bacteria.

2. Method according to any of Claims 1, wherein the lactic acid bacteria fermentation is carried out at a temperature of from 12 °C to 44 °C and up to a pH of from 3.5 to 5.5.

3. Method according to either of Claims 1 and 2, wherein the propionic acid bacteria fermentation is carried out under exclusion of air, at a temperature of from 8°C to 32°C and a pH of from 5.5 to 7.5.

4. Method according to any of Claims 1 to 3, wherein the step for killing lactic acid bacteria is a pasteurization, a drying, a sterilization, a heat-treatment or an irradiation step.

5. Method according to any of Claims 1 to 4, wherein the double-fermented sourdough or the sourdough concentrate is rendered storable by means of drying.

6. Method according to any of Claims 1 to 5, **characterized in that** the double fermentation leads to a concentration of at least 1% (w/w) propionic acid in the fermentation broth.

7. Sourdough obtainable by the method according to Claims 1 to 6.

8. Sourdough obtainable in that the sourdough is fermented in two steps which are substantially independent of one another, with first a first fermentation with lactic acid bacteria and then a second fermentation with propionic acid bacteria being carried out, and in that a step for killing the lactic acid bacteria is carried out between the first fermentation with lactic acid bacteria and the second fermentation with propionic acid bacteria.

9. Sourdough according to Claim 8, **characterized in that** the double-fermented sourdough is enriched with flavouring substances and has a concentration of at least 1% (w/w) propionic acid.

10. Sourdough concentrate obtainable by concentration from the sourdough according to Claims 7 to 9, containing at least *5*% *(w*/*w)* propionic acid.

11. Use of sourdough according to any of Claims 7 to 9 or of sourdough concentrate according to Claim 10 for the preparation of baked goods.

12. Use of sourdough according to any of Claims 7 to 9 or of sourdough concentrate according to Claim 10 for flavour enrichment or flavour enhancement in baked goods.

13. Use of sourdough according to any of Claims 7 to 9 or of sourdough concentrate according to Claim 10 for the biopreservation of baked goods.

## Revendications

1. Procédé d'enrichissement d'arômes dans le levain, **caractérisé en ce que** le levain est fermenté en deux étapes essentiellement indépendantes l'une de l'autre, une première fermentation étant tout d'abord réalisée avec des bactéries d'acide lactique, puis une deuxième fermentation avec des bactéries d'acide propionique, et **en ce qu'**une étape de destruction des bactéries d'acide lactique est réalisée entre la première fermentation avec des bactéries d'acide lactique et la deuxième fermentation avec des bactéries d'acide propionique.

2. Procédé selon l'une quelconque des revendications 1, dans lequel la fermentation avec des bactéries d'acide lactique est réalisée à une température de 12 °C à 44 °C et jusqu'à un pH de 3,5 à 5,5.

3. Procédé selon l'une quelconque des revendications 1 ou 2, dans lequel la fermentation avec des bactéries d'acide propionique est réalisée avec exclusion de l'air, à une température de 8 °C à 32 °C et un pH de 5,5 à 7,5.

4. Procédé selon l'une quelconque des revendications 1 à 3, dans lequel l'étape de destruction des bactéries d'acide lactique est une pasteurisation, un séchage, une stérilisation, un traitement thermique ou une exposition à des rayonnements.

5. Procédé selon l'une quelconque des revendications 1 à 4, dans lequel le levain doublement fermenté ou le concentré de levain est rendu apte au stockage par séchage.

6. Procédé selon l'une quelconque des revendications 1 à 5, **caractérisé en ce que** la fermentation double conduit à une concentration d' au moins 1 % m/m d' acide propionique dans le bouillon de fermentation.

7. Levain pouvant être obtenu par le procédé selon les revendications 1 à 6.

8. Levain, pouvant être obtenu en ce que le levain est fermenté en deux étapes essentiellement indépendantes l'une de l'autre, une première fermentation étant tout d'abord réalisée avec des bactéries d'acide lactique, puis une deuxième fermentation avec des bactéries d'acide propionique, et en ce qu'une étape de destruction des bactéries d'acide lactique est réalisée entre la première fermentation avec des bactéries d'acide lactique et la deuxième fermentation avec des bactéries d'acide propionique.

9. Levain selon la revendication 8, **caractérisé en ce que** le levain doublement fermenté est enrichi en arômes et présente une concentration d'au moins 1 % m/m d'acide propionique.

10. Concentré de levain pouvant être obtenu par réduction à partir du levain selon les revendications 7 à 9, contenant au moins 5 % m/m d'acide propionique.

11. Utilisation du levain selon l'une quelconque des revendications 7 à 9 ou du concentré de levain selon la revendication 10 pour la préparation de produits de boulangerie.

12. Utilisation du levain selon l'une quelconque des revendications 7 à 9 ou du concentré de levain selon la revendication 10 pour l'enrichissement des arômes ou le renforcement des arômes dans des produits de boulangerie.

13. Utilisation du levain selon l'une quelconque des revendications 7 à 9 ou du concentré de levain selon la revendication 10 pour la bioconservation de produits de boulangerie.
